(19) Europäisches Patentamt
European Patent Office
Office européen des brevets

(11) EP 1 914 878 A2

(12) EUROPEAN PATENT APPLICATION

(43) Date of publication:
23.04.2008 Bulletin 2008/17

(51) Int Cl.:
*H02P 21/00* (2006.01)

(21) Application number: 07020329.4

(22) Date of filing: 17.10.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 17.10.2006 JP 2006283019
13.04.2007 JP 2007105592

(71) Applicant: NSK Ltd.
Tokyo 141-8560 (JP)

(72) Inventors:
• Kovudhikulrungsri, Lilit
Maebashi-shi
Gunma 371-8527 (JP)
• Mori, Kenji
Maebashi-shi
Gunma 371-8527 (JP)

(74) Representative: Grünecker, Kinkeldey,
Stockmair & Schwanhäusser
Anwaltssozietät
Maximilianstrasse 58
80538 München (DE)

(54) **Motor drive control device, motor drive control method and electric power steering device using motor drive control device**

(57) A motor drive control device includes: a generation part for generating a current command value; a current detection part for detecting a drive current of an electric motor; a motor feedback control part for controlling feedback of the electric motor based on the current command value and a drive current detection value; a prefilter with order of one or more for adjusting the current command value, the prefilter being interposed between the generation part and the motor feedback control part; and a series compensator with order of two or more for determining a voltage command value of the motor feedback control part based on the current command value adjusted by the prefilter and the drive current detection value of the electric motor.

FIG. 1

EP 1 914 878 A2

**Description**

**CONTROL DEVICE**

This application is based on and claims priority from Japanese Patent Application No. 2006-283019, filed on Oct. 17, 2006 and No. 2007-105592, filed on Apr. 13, 2007, the entire contents of which are hereby incorporated by reference.

BACKGROUND OF THE INVENTION

1. Technical Field

The present disclosure relates to a motor drive control device including a current command value calculation part which calculates an current command value, a current detection part which detects drive current of an electric motor, and a motor feedback control part which controls feedback of the power motor on the basis of the current command value and a drive current detection value; a motor drive control method; and an electric power steering device using a motor drive control device.

2. Related Art

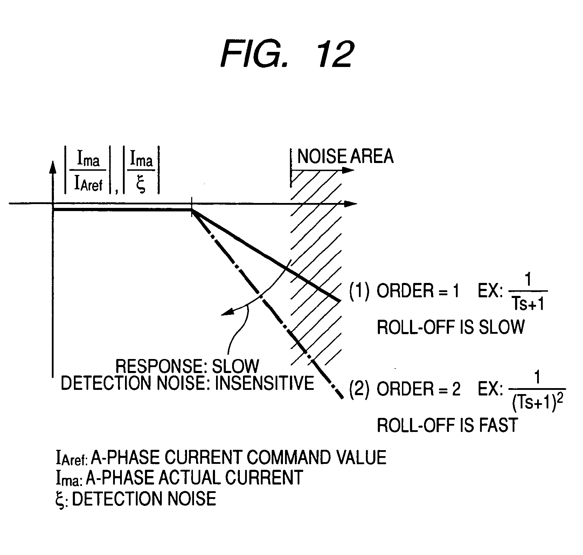

Recently, the demand of an electric power steering device is increasing, and requirements of high thrust and noiselessness for the electric power steering device are increasing. It is desirable from a viewpoint of current control that response is fast and robust for detection noise such as disturbance, noise of a current detector, a quantization error, or the like is high.
Therefore, in related-art, there has been proposed an electric power steering device, which includes a motor which applies steering assist force to a steering system of a vehicle, a torque sensor which detects the steering force acting on a steering wheel, and a current detector which detects the current of the motor. The electric power steering device controls feedback of the electric motor based on output from a current controller which inputs a deviation between a current command value Iref determined based on the output value from the torque sensor and current Im of the motor.
This electric power steering device is characterized in that gain of the current controller is finite. Herein, the current controller is composed of at least a proportional function and a first order lag function, or composed of a lead-lag function. See, e.g., Japanese Patent Unexamined Document: JP-A-2006-27412 (P2, Fig. 1, Fig. 2)
In the related-art two degrees of freedom current control described in JP-A-2006-27412, it can meet both of improvement in response and reduction of detection noise. However, in case that the detection noise is large, characteristic of a closed-loop of the current control system is first order, influences by the detection noise may not be removed completely. In this case, it is necessary, as shown in Fig. 12, to increase order of the control system, and to make roll-off fast. However, hereby, response of the control system lowers. Particularly, in case that phase current is directly controlled, amplitude attenuation and phase lag of actual current during the high rotation speed are large, so that there is an unsolved problem that the actual current does not follow the current command value.

SUMMARY OF THE INVENTION

The present invention has been made in view of the above unsolved problem of the related-art. An aspect of the present invention provides a motor drive control device, a motor drive control method and an electric power steering device, which enable actual current to follow a current command value by making roll-off of a closed-loop characteristic fast, reducing strident high-frequency sound due to quantization noise, and reducing amplitude attenuation and phase lag of the actual current.
In order to achieve the above object, according to one or more aspects of the present invention, a motor drive control device comprises:

   a generation part for generating a current command value;
   a current detection part for detecting a drive current of an electric motor;
   a motor feedback control part for controlling feedback of the electric motor based on the current command value and a drive current detection value;
   a prefilter with order of one or more for adjusting the current command value, said prefilter being interposed between the generation part and the motor feedback control part; and
   a series compensator with order of two or more for determining a voltage command value of the motor feedback control part based on the current command value adjusted by the prefilter and the drive current detection value of the electric motor.

According to another aspect of the present invention, the prefilter may have the configuration in which one or more phase lead-lag compensators for adjusting the current command value are connected in series, and the series compensator may have the configuration in which two or more phase lead-lag compensators for determining the voltage command value are connected in series.

According to another aspect of the present invention, the series compensator may have a finite gain.

According to another aspect of the present invention, a motor drive control device comprises:

a current detection part for detecting drive currents of (n-1) phases of an n-phase electric motor, n being an integer of 3 or more;
a generation part for generating current command values of (n-1) phases;
a motor feedback control part for controlling feedback of the electric motor based on the current command values and drive current detection values;
a prefilter with order of one or more for adjusting the (n-1) current command values, said prefilter being interposed between the generation part and the motor feedback control part; and
a series compensator with order of two or more for determining a voltage command value of the motor feedback control part based on the (n-1) current command values adjusted by the prefilter and the drive current detection values of (n-1) phases of the n-phase electric motor.

According to another aspect of the present invention, a motor drive control device comprises:

current detection parts for detecting drive currents of n-phases of an n-phase electric motor, n being an integer of 3 or more;
a generation part for generating current command values of (n-1) phases;
a motor feedback control part for controlling feedback of the electric motor based on the current command values and drive current detection values;
a set of prefilters with order of one or more for adjusting the (n-1) current command values, said prefilters being interposed between the generation part and the motor feedback control part; and
a filter output forming part for forming filter output of remaining one-phase by summing up filter outputs from the prefilters, wherein
the motor feedback control part includes:

deviation calculation parts for calculating deviations of n-phases between the filter outputs from the prefilters and the filter outputs formed by the filter output forming part, and drive current detection values of n-phases of the n-phase electric motor;
current deviation correction parts for correcting current deviations of (n-1) phases based on average values of the deviations of n-phases outputted from the deviation calculation parts;
(n-1) series compensators which have order of two or more and a finite gain, and apply compensations to the corrected current deviations of (n-1) phases outputted from the current deviation correction parts; and
compensation value forming parts for forming a compensation value of remaining one-phase by summing up compensation values of (n-1) phases of the series compensators.

According to another aspect of the present invention, a motor drive control device comprises:

current detection parts for detecting drive currents of n-phases of an n-phase electric motor, n being an integer of 3 or more, to convert the detected drive current values into a d-q axis current detection value by which the electric motor rotates at a frequency corresponding to an angular velocity thereof;
a generation part for generating a d-q axis current command value, said generation part determining a command value at the d-q axis coordinates;
a motor feedback control part for controlling feedback of the electric motor based on the d-q axis current command value and the d-q axis current detection value;
a set of prefilters with order of one or more for adjusting the d-q axis current command value, said prefilters being interposed between the generation part and the motor feedback control part;
a set of series compensators which have order of two or more and a finite gain, and determines a voltage command value of the motor feedback control part based on the d-q axis current command value adjusted by the prefilters and the d-q axis drive current detection value; and
two-phase/n-phase conversion parts for applying 2-phase/n-phase conversion to compensation output from the series compensators.

According to another aspect of the present invention, it is preferable that the motor drive control device further comprises:

an angular velocity detector for detecting an angular velocity of the electric motor; wherein
the motor feedback control part includes either of a gain and a filter which increases or decrease a current deviation between the adjusted current command value and the drive current detection value; and
the motor feedback control part adjusts either of the gain and the filter based on at least one of the angular velocity of the electric motor, the current command value, and the drive current detection value.

According to another aspect of the present invention, it is preferable that the motor feedback control part includes either of a gain and a filter which increases or decrease output of the series compensator, and
the motor feedback control part adjusts either of the gain and the filter based on at least one of the angular velocity of the electric motor, the current command value, and the drive current detection value.

According to another aspect of the present invention, each of the prefilter and the series compensator may have a constant which is determined at least in accordance with a time delay of a current control system.

According to another aspect of the present invention, the electric motor may be a brushless motor.

According to another aspect of the present invention, an electromotive force of the electric motor may be set to either of a rectangular wave electromotive force and a quasi-rectangular electromotive force including a harmonic component in sine wave.

According to another aspect of the present invention, a motor drive control method comprising the steps of:

adjusting a current command value generated by a generation part and inputted to an electric motor, by a prefilter having order of one or more; and
determining a voltage command value for the electric motor, based on a current deviation between the adjusted current command value and the drive current detection value of the electric motor, by a series compensator having order of two or more.

According to another aspect of the present invention, it is preferable that the prefilter has the configuration in which one or more phase lead-lag compensators for adjusting the current command value are connected in series, and the series compensator has the configuration in which two or more phase lead-lag compensators for determining the voltage command value are connected in series.

According to another aspect of the present invention, the series compensator may have a finite gain.

According to another aspect of the present invention, each of the prefilter and the series compensator may have a constant which is determined at least in accordance with a time delay of a current control system.

According to another aspect of the present invention, in an electric power steering device, drive of an electric motor which generates steering assist force for a steering system may be controlled by a motor drive control device, the motor drive control device comprising:

a generation part for generating a current command value;
a current detection part for detecting a drive current of an electric motor;
a motor feedback control part for controlling feedback of the electric motor based on the current command value and a drive current detection value;
a prefilter with order of one or more for adjusting the current command value, said prefilter being interposed between the generation part and the motor feedback control part; and
a series compensator with order of two or more for determining a voltage command value of the motor feedback control part based on the current command value adjusted by the prefilter and the drive current detection value of the electric motor.

According to another aspect of the present invention, an electric power steering device comprises:

at least one of a speed detection part which detects speed of a vehicle and a steering torque detection part which detects steering torque applied to a steering system;
an electric motor which generates steering assist force for the steering system; and
a motor drive control device which controls drive of the electric motor, the motor drive control device comprising:

a generation part for generating a current command value;

a current detection part for detecting a drive current of an electric motor;
a motor feedback control part for controlling feedback of the electric motor based on the current command value and a drive current detection value;
a prefilter with order of one or more for adjusting the current command value, said prefilter being interposed between the generation part and the motor feedback control part; and
a series compensator with order of two or more for determining a voltage command value of the motor feedback control part based on the current command value adjusted by the prefilter and the drive current detection value of the electric motor, wherein

the motor feedback control part of the motor drive control device includes either of a gain and a filter which increases and decreases a current deviation between the adjusted current command value and the drive current detection value, and the motor feedback control part adjusts either of the gain and filter by at least one of the speed, the steering torque, an angular velocity of the electric motor, the current command value and the drive current detection value.

According to another aspect of the present invention, an electric power steering device comprises:

at least one of a speed detection part which detects speed of a vehicle and a steering torque detection part which detects steering torque applied to a steering system;
an electric motor which generates steering assist force for the steering system; and
the motor drive control device which controls drive of the electric motor, the motor drive control device comprising:

a generation part for generating a current command value;
a current detection part for detecting a drive current of an electric motor;
a motor feedback control part for controlling feedback of the electric motor based on the current command value and a drive current detection value;
a prefilter with order of one or more for adjusting the current command value, said prefilter being interposed between the generation part and the motor feedback control part; and
a series compensator with order of two or more for determining a voltage command value of the motor feedback control part based on the current command value adjusted by the prefilter and the drive current detection value of the electric motor, wherein

the motor feedback control part of the motor drive control device includes either of a gain and a filter which increases and decreases outputs of the series compensator, and
the motor feedback control part adjusts either of the gain and filter by at least one of the speed, the steering torque, an angular velocity of the electric motor, the current command value and the drive current detection value.

According to the present invention, there are provided: a prefilter with order of one or more for adjusting the current command value, said prefilter being interposed between the generation part and the motor feedback control part; and a series compensator with order of two or more for determining a voltage command value of the motor feedback control part based on the current command value adjusted by the prefilter and the drive current detection value of the electric motor. Therefore, response of the current control system and sensitivity of the detection noise can be freely adjusted individually, so that it is possible to provide a motor drive control device and method which can improve response while reducing motor noise due to detection noise.

Further, it is possible to obtain an advantage that good steering performance can be secured by applying the above motor drive control device to an electric power steering device.
Further, it is possible to obtain an advantage that: by performing (n-1) phases control in case that an n-phase electric motor is driven (n is an integer of 3 or more), while reducing a calculation load, ambient noise due to noises of the current detection error and the quantization error, and torque ripple can be reduced.

**BRIEF DESCRIPTION OF THE DRAWINGS**

In the accompanying drawings:

Fig. 1 is a schematic view showing one exemplary embodiment of the present invention;
Fig. 2 is a block diagram showing the concrete configuration of a control device 13;
Fig. 3 is a block diagram showing the concrete configuration of a second detection part for detecting motor angular velocity and an second generation part for generating each-phase current command value in Fig. 2;
Fig. 4 is an explanatory view showing a current command value calculation map which is used in a steering assist current command value generation part and represents a relationship between steering torque and a current command value;

Fig. 5 is a block diagram showing a transfer function in a first exemplary embodiment of the present invention;

Fig. 6 is a circuit diagram showing an inverter circuit;

Fig. 7 is a characteristic diagram showing gain characteristics of a current control system used in description of the operation in the first exemplary embodiment;

Fig. 8 is a block diagram showing a second exemplary embodiment of the present invention, which is similar to Fig. 5;

Fig. 9 is a block diagram showing a third exemplary embodiment of the present invention, which is similar to Fig. 8;

Fig. 10 is a block diagram showing a modified example of the third exemplary embodiment of the present invention, which is similar to Fig. 9;

Fig. 11 is a block diagram showing a fourth exemplary embodiment of the present invention, which is similar to Fig. 9;

Fig. 12 is a characteristic diagram showing gain characteristics of a current control system of related-art;

Fig. 13 is a block diagram showing a fifth exemplary embodiment of the present invention, which is similar to Fig. 2;

Fig. 14 is a block diagram showing a prefilter that can be applied to the fifth exemplary embodiment;

Fig. 15 is a block diagram showing a series compensator that can be applied to the fifth exemplary embodiment;

Fig. 16 is a block diagram showing a sixth exemplary embodiment of the present invention, which is similar to Figs. 2 and 13;

Fig. 17 is a block diagram showing a prefilter that can be applied to the sixth exemplary embodiment;

Fig. 18 is a block diagram showing a detection error correction part that can be applied to the sixth exemplary embodiment;

Fig. 19 is a block diagram showing a series compensator that can be applied to the sixth exemplary embodiment; and

Fig. 20 is a block diagram showing a seventh exemplary embodiment.

## DETAILED DESCRIPTION OF EXEMPLARY EMBODIMENTS

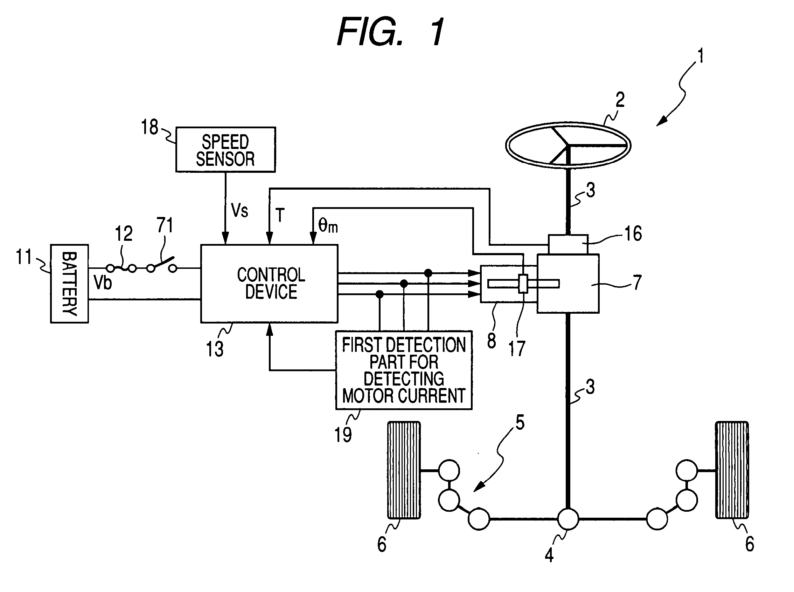

Exemplary embodiments of the present invention will be described below with reference to drawings. Fig. 1 is a whole constituent diagram, in which a reference numeral 1 represents a steering mechanism. This steering mechanism 1 includes a steering shaft 3 to which a steering wheel 2 is attached, a rack pinion mechanism 4 which is coupled to this steering shaft 3 on the opposite side to the steering wheel 2 side, and right and left front wheels 6 coupled to the rack pinion mechanism 4 through a coupling mechanism 5 such as a tie-rod or the like.

To the steering shaft 3, an electric motor 8 is coupled through a speed reducer 7. This electric motor 8 is composed of a brushless motor which employs, for example, three-phase AC drive and star(Y)-connection, and the electric motor 8 operates as a steering assist force generating motor which generates steering assist force of an electric power steering device.

The drive of the electric motor 8 is controlled by a control device 13 to which battery voltage Vb outputted from a battery 11 mounted on a vehicle is supplied through a fuse 12 and an ignition switch 71.

A steering torque T, motor rotation angle θm and vehicle speed Vs are input to this control device 13 respectively. The steering torque T is detected by a steering torque sensor 16 (a steering torque detection part) provided for the steering shaft 3 and is input into the steering wheel 2. The motor rotation angle θm is detected by a motor angle detector 17 such as a resolver provided for the electric motor 8. The vehicle speed Vs is detected by a speed sensor 18 as a speed detection part. Further, each phase currents Ima, Imb, Imc of the electric motor 8 detected by a first detection part 19 for detecting motor current are input to this control device 13.

The steering torque sensor 16 is used in order to detect the steering torque T which is applied to the steering wheel 2 and transmitted to the steering shaft 3. The steering torque sensor 16 is so structured as to convert the steering torque into torsion angle displacement of a torsion bar interposed between an input shaft and an output shaft which are not shown, detect this torsion angle displacement by a magnetic signal, and convert the detected torsion angle displacement into an electric signal.

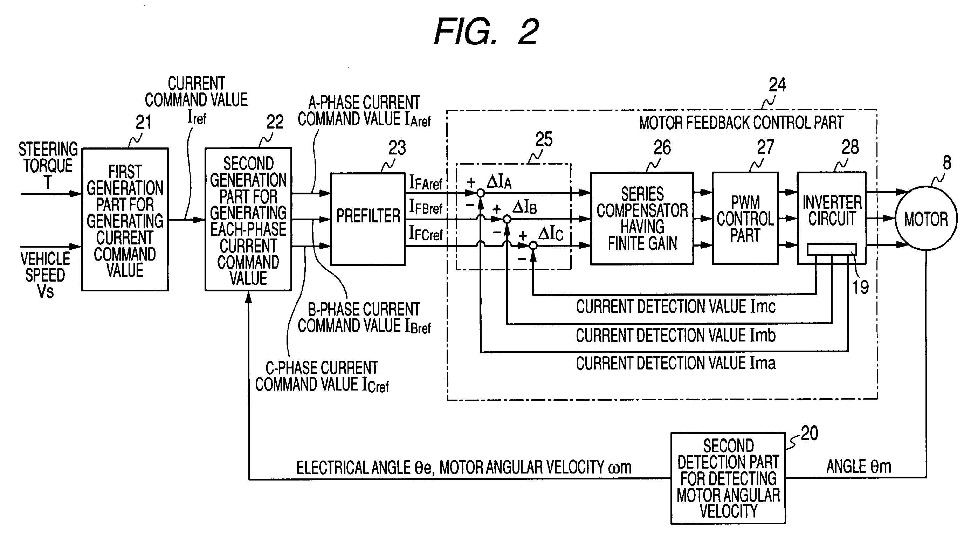

The control device 13, as shown in Fig. 2, includes: a second detection part 20 for detecting a motor angular velocity; a first generation part 21 for generating a current command value; a second generation part 22 for generating an each-phase current command value; a prefilter 23; and a motor feedback control part 24. The second detection part 20 calculates a motor angular velocity $\omega_m$ on the basis of the detection signal from the motor angle detector 17. The first generation part 21 generates a current command value $I_{ref}$ for the electric motor 8 on the basis of the steering torque T detected by the steering torque sensor 16 and a speed Vs detected by the speed sensor 18 which have been inputted thereto. The second generation part 22 calculates three-phase current command values $I_{Aref}$, $I_{Bref}$, and $I_{Cref}$ of the electric motor 8 on the basis of the current command value generated by this first generation part 21. The prefilter 23 performs prefiltering in which amplitude attenuation and phase lag of actual current are adjusted in relation to the current command values $I_{Aref}$, $I_{Bref}$, and $I_{Cref}$ calculated by this second generation part 22. The motor feedback control part 24 controls drive of the electric motor 8 on the basis of the phase current command values $I_{FAref}$, $I_{FBref}$, and $I_{FCref}$ subjected to the filter processing by the prefilter 23, and each phase current Ima, Imb, Imc detected by the first detection part 19.

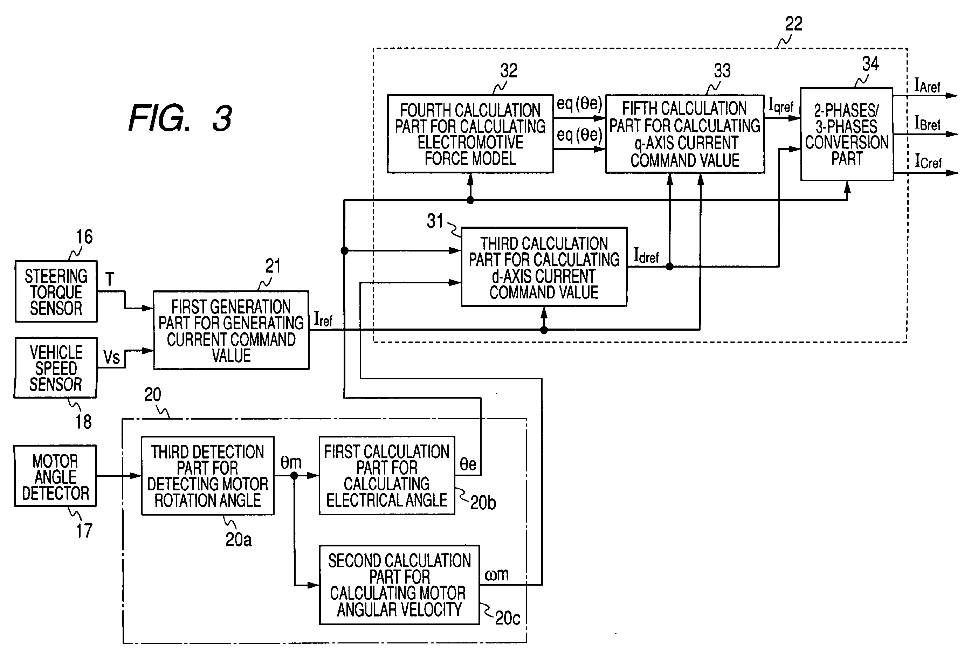

The second detection part 20 includes, as an example, as shown in Fig. 3, a third detection part 20a for detecting a motor rotation angle, a first calculation part 20b for calculating an electric angle, and a second calculation part 20c for calculating a motor angular velocity. The third detection part 20a receives the output signal from the motor angle detector 17 and detects a motor rotation angle θm. The first calculation part 20b calculates an electric angle θe on the basis of the motor rotation angle θm detected by this third detection part 20a. The second calculation part 20c differentiates the motor rotation angle θm calculated by the third detection part 20a for detecting motor rotation angle thereby to calculate a motor angular velocity $\overline{\omega}_m$.

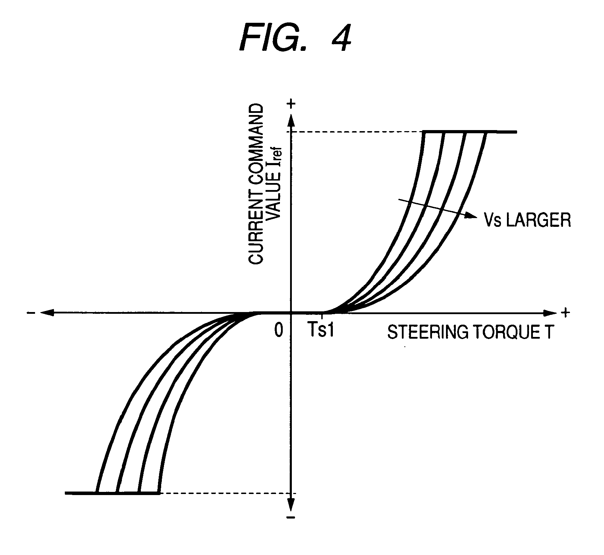

The first generation part 21 calculates a current command value $I_{ref}$ with referring to a current command value calculation map for calculating a current command value $I_{ref}$ shown in Fig. 4 on the basis of the steering torque T inputted from the steering torque sensor 16 and the vehicle speed Vs.

This current command value calculation map, as shown in Fig. 4, plots the steering torque T in a horizontal axis and the current command value $I_{ref}$ in a vertical axis, and is constituted by a characteristic diagram represented by a parabolic curve with speed Vs as a parameter. Herein, from "0" of the steering torque T to a set value Ts1 near the "0", the current command value $I_{ref}$ is kept "0"; and when the steering torque T exceeds the set value Ts1, firstly, the current command value $I_{ref}$ increases comparatively gently in relation to increase of the steering torque T. However, when the steering torque T increases more, the current command value $I_{ref}$ is set so as to increase sharply in relation to its increase of the steering torque T, and this characteristic curve is set so that the inclination of the curve becomes smaller as the speed becomes higher.

The second generation part 22 includes: a third calculation part 31 for calculating a d-axis current command value; a fourth calculation part 32 for calculating an electromotive force model; a fifth calculation part 33 for calculating a q-axis current command value; and a two-phase/three-phase conversion part 34. The third calculation part 31 calculates the d-axis current command value $I_{dref}$ on the basis of the current command value $I_{ref}$, the electric angle θe and the motor angular velocity $\overline{\omega}_m$. The fourth calculation part 32 calculates a d-axis EMF component ed (θe) and a q-axis EMF component eq (θe) of a d-q axis electromotive force EMF (Electromotive Force) on the basis of the electric angle θe. The fifth calculation part 33 calculates a q-axis current command value $I_{qref}$ on the basis of the d-axis EMF component ed (θe) and the q-axis EMF component eq (θe) outputted from this fourth calculation part 32. The two-phase/three-phase conversion part 34 converts the d-axis current command value $I_{dref}$ outputted from the third calculation part 31 and the q-axis current command value $I_{qref}$ outputted from the fifth calculation part 33 into three-phase current command values $I_{Aref}$, $I_{Bref}$, and $I_{Cref}$.

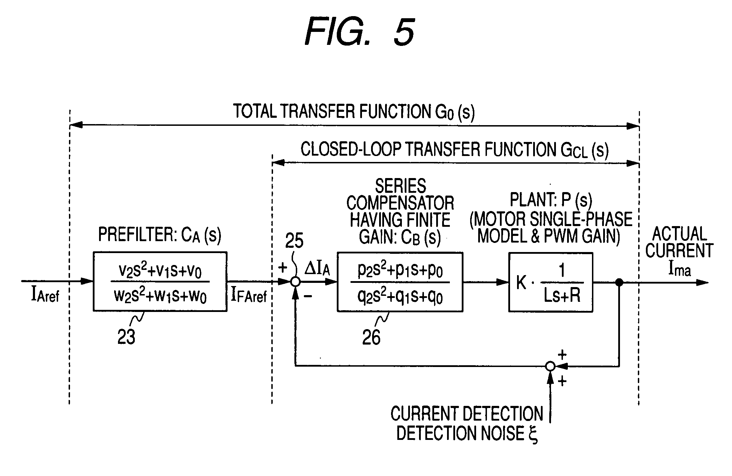

The prefilter 23 performs prefiltering in which amplitude attenuation and phase lag of actual current are adjusted thereby to adjust frequency characteristics from the current command value to the actual current. Regarding an A-phase which is one phase of the electric motor 8, the block diagram from the current command value to the actual current is shown in Fig. 5. An example of a transfer function $C_A(S)$ of the prefilter 23 has second-order as represented by the following equation (1):

$$C_A(s) = (v_2 s^2 + v_1 s + v_0)/(w_2 s^2 + w_1 s + w_0) \qquad \ldots (1)$$

Where $v_0$, $v_1$ and $v_2$ are constants, $w_0$, $w_1$ and $w_2$ are also constants, and s is Laplace operator.

Further, the motor feedback control part 24 includes: a subtraction part 25, a series compensator 26, a PWM control part 27 and an inverter circuit 28. The subtraction part 25 subtracts the real phase current values Ima, Imb and Imc detected by the first detection part 19 from the phase current command values $I_{FAref}$, $I_{FBref}$, and $I_{FCref}$ subjected to the filter processing and outputted from the prefilter 23, thereby to calculate current deviations $\Delta I_A$, $\Delta I_B$, and $\Delta I_C$. The series compensator 26 having a finite gain performs series compensation processing on the basis of the current deviations $\Delta I_A$, $\Delta I_B$, and $\Delta I_C$ outputted from this subtraction part 25, thereby to calculate voltage command values $V_{Aref}$, $V_{Bref}$, and $V_{Cref}$ in the respective phases. The PWM control part 27 generates pulse width modulation (PWM) signals on the basis of the voltage command values $V_{Aref}$, $V_{Bref}$, and $V_{Cref}$ outputted from this series compensator 26. The inverter circuit 28 has six field-effect transistors Qau to Qcd of which gates are controlled by the pulse width modulation signals outputted by the PWM control part 27, and supplies to the electric motor 8 the phase currents Ima, Imb and Imc corresponding to the phase current command values $I_{Aref}$, $I_{Bref}$, and $I_{cref}$ generated by the second generation part 22.

Here, an example of a transfer function of the series compensator 26 is shown in Fig. 5, wherein a transfer function $C_B(s)$ is composed of second order as represented by the following equation (2) so as to make the roll-off fast with gain characteristic of a closed-loop as second order (roll-off: -40dB/decade) in order to lower sensitivity of the detection noise. Further, in order to reduce more the vibration and the motor noise, a gain of the series compensator 26 is set finite.

$$C_B(s)=(p_2s^2+p_1s+p_0)/(q_2s^2+q_1s+q_0) \qquad \dots (2)$$

In case of such the configuration, the concrete design conception in one of the respective phases of the electric motor 8, for example, in the A-phase will be described.

When a transfer function from the A-phase current command value $I_{Aref}$ outputted from the second generation part 22 to the actual current Ima of the electric motor is a total transfer function Go(s), a transfer function of the closed-loop is $G_{CL}(s)$, a transfer function of the prefilter 23 is $C_A(s)$, a transfer function of the series compensator 26 is $C_B(s)$ and a transfer function of a plant composed of the electric motor 8 and the inverter circuit 28 is P(s), relationships represented by the following equations are obtained, where $T_1$ to $T_4$ are taken as time constants, L as a motor phase inductance, R as a motor phase resistance, and K as an inverter gain.

$$G_{CL}(s) = C_B(s)\,P(s)/\,(1+C_B(s)\,P(s)) \qquad \dots (3)$$

$$G_0(s) = C_A(s)\,G_{CL}(s) \qquad \dots (4)$$

In order to simplify the description, the design conception in case that the gain of the series compensator 26 is infinite will be described.

Firstly, in order to make the roll-off of the closed-loop fast, the transfer function $G_{CL}(s)$ of the closed-loop is set to second-order Butterworth filter characteristic represented by the following equation (5).

$$G_{CL}(s) = 1/\,(T_2s+1)^2 \qquad \dots (5)$$

Next, the Total transfer function $G_0(s)$ is set to first-order characteristic represented by the following equation (6):

$$G_0(s) = 1/\,(T_4s+1) \qquad \dots (6)$$

Then, the transfer function $C_A(s)$ of the prefilter 23 is represented by the following equation (7).

$$C_A(s) = (T_2s+1)^2/\,(T_4s+1) \qquad \dots (7)$$

As clear from this equation (7), since the transfer function $C_A(s)$ of the prefilter 23 is improper, the filter cannot be realized.

In order to prevent this impossibility, it is necessary to make difference in order between a denominator and a numerator of the transfer function $G_{CL}(s)$ "1". Therefore, the roll-off is changed to -20dB/decade by the frequency in which the gain has become small enough. Namely,

$$G_{CL}(s) = (T_1 s + 1) / (T_2 s + 1)^2 \qquad \ldots(8)$$

where $T_1 \ll T_2$.

By such the setting, the transfer function $C_A(s)$ of the prefilter 23 becomes as follows:

$$C_A(s) = (T_2 s + 1)^2 / \{(T_1 s + 1)(T_4 s + 1)\} \qquad \ldots (9)$$

In result, the prefilter 23 can be realized.

Accordingly, such the transfer function $C_B(s)$ of the series compensator 26 that the transfer function $G_{CL}(s)$ of the closed-loop becomes the aforesaid equation (8) is represented by the following equation.

$$C_B(s) = P^{-1}(s) \times (T_1 s + 1) / \{T_2^2 s^2 + 1 + (2T_2 s - T_1) s\}$$

$$= \{(Ls + R)/K\} \times [(T_1 s + 1) / \{T_2^2 s^2 + (2T_2 - T_1) s\}]$$

A steady-state gain of this the transfer function $C_B(s)$ becomes as follows.

$$\lim_{s \to 0} C_B(s) = \infty \qquad \ldots(11)$$

Therefore, even in case that the current deviations $\Delta I_A$ to $\Delta I_c$ are small in a state under a low-frequency area such as when the steering wheel 2 is steering-held or steered slowly, the steady-state gain is amplified to infinity, so that vibration and motor noise are generated, which gives a driver a bad feeling.

In order to solve generation of these vibration and noise, it is necessary to set the steady-state gain of the transfer function $C_B(s)$ of the series compensator 26 finite. Therefore, the transfer function $C_B(s)$ is set as represented by the following equation (12).

$$C_B(s) = \frac{Ls + R}{K} \cdot \frac{T_1 s + 1}{T_2^2 s^2 + (2T_2 - T_1)s} \cdot \frac{s}{s + a} = \frac{Ls + R}{K} \cdot \frac{T_1 s + 1}{\{T_2^2 s + (2T_2 - T_1)\}(s + a)}$$

$$\ldots(12)$$

When the transfer function $C_B(s)$ is set as represented by the above equation (12), the steady-state gain becomes as follows.

$$\lim_{s \to 0} C_B(s) = \frac{R/K}{a(2T_2 - T_1)} \qquad \ldots(13)$$

From this equation, it is known that the steady-state gain does not become infinite. At this time, a constant a is set so that vibration is not generated in the steering wheel 2 when the steering wheel 2 is steering-held and steered slowly.

Since the characteristic of the closed-loop changes according to the magnitude of this constant a, it is preferable to calculate the transfer function of the closed-loop again, and set a constant of the transfer function $C_A(s)$ of the prefilter 23 so that the Total transfer function $G_0(s)$ becomes desirable.

Further, it is preferable that the constants of the prefilter 23 and the series compensator 26 are designed on the basis of the procedure described in the equations (3) to (10), considering the current control calculation delay in the plant transfer function P(s).

Further, the PWM control part 27 turns on/off field effect transistors Qau to Qcd of the inverter circuit 28, which will be described, by PWM (pulse width modulation) signals of duty ratios Da, Db and Dc determined on the basis of the each-phase voltage command values $V_{Aref}$, $V_{Bref}$, and $V_{Cref}$ outputted from the series compensator 26, whereby the magnitudes of the currents Ima, Imb and Imc flowing actually in the electric motor 8 are controlled. Here, according to the magnitudes of the duty ratios Da, Db and Dc, the filed effect transistors Qau, Qbu and Qcu constituting an upper arm, and the filed effect transistors Qad, Qbd and Qcd constituting a lower arm are driven respectively with dead time for avoiding arm short by PWM.

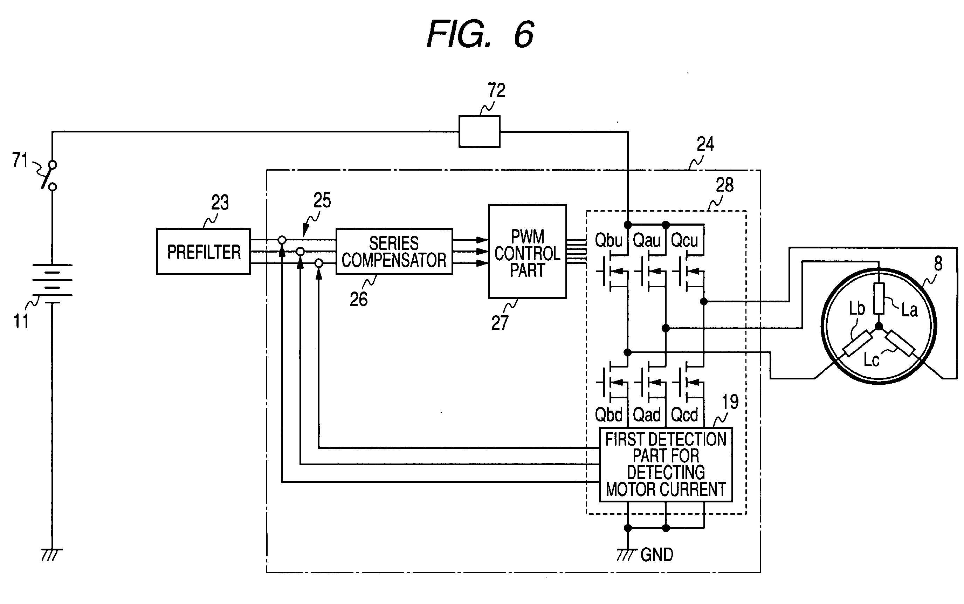

Further, the inverter circuit 28, as shown in Fig. 6, is composed of a series circuit in which the two field effect transistors Qau and Qad are connected in series; and two series circuits of the field effect transistors Qbu and Qbd, and the field effect transistors Qcu and Qcd, which are connected in parallel to the series circuit of the field effect transistors Qau and Qad. A connection point between the field effect transistors Qau and Qad of this inverter circuit 28, a connection point between the field effect transistors Qbu and Qbd and a connection point between the field effect transistors Qcu and Qcd are connected to respectively excitation coils La, Lb and Lc which are star-connected in the electric motor 8. Further, between the field effect transistors Qad, Qbd and Qcd, and the ground, the first detection part 19 for detecting the motor drive currents Ima, Imb and Imc is arranged.

Next, the operation in the above embodiment will be described.

When the ignition switch 71 shown in Figs. 1 and 6 is turned on, the electric power is input to the control device 13 from the battery 11, and steering assist control processing in the control device 13 is started. Further, a relay 72 shown in Fig. 6 enters an energized state, and battery voltage Vb is supplied to the inverter circuit 28 thereby to put the electric motor 8 in a drivable state.

At this time, the first generation part 21 reads the steering torque T detected by the steering torque sensor 16, and calculates a current command value $I_{ref}$ on the basis of this steering torque T and a speed Vs inputted from the speed sensor 18, referring to the current command value calculation map shown in Fig. 4.

On the other hand, the second detection part 20 detects a motor rotation angle θm by the third detection part 20a, calculates an electric angle θe by the first calculation part 20b on the basis of the detected motor rotation angle θm, and differentiates the motor rotation angle θm by the second calculation part 20c thereby to calculate a motor angular velocity $\overline{\omega}_m$.

Next, the current command value $I_{ref}$ generated by the first generation part 21, and the electric angle θe and the motor angular velocity $\overline{\omega}_m$ which have been calculated by the second detection part 20 are supplied to the second generation part 22. The second generation part 22 executes d-q axis command value calculating processing on the basis of the current command value $I_{ref}$, the electric angle θe and the motor angular velocity $\overline{\omega}_m$, thereby to obtain a d-axis current command value $Id_{ref}$ and a q-axis current command value $Iq_{ref}$ Further, the second generation part 22 subjects these d-axis current command value $Id_{ref}$ and q-axis current command value $Iq_{ref}$ to two-phase/three-phase conversion processing thereby to calculate three-phase current command values $I_{Aref}$, $I_{Bref}$, and $I_{Cref}$.

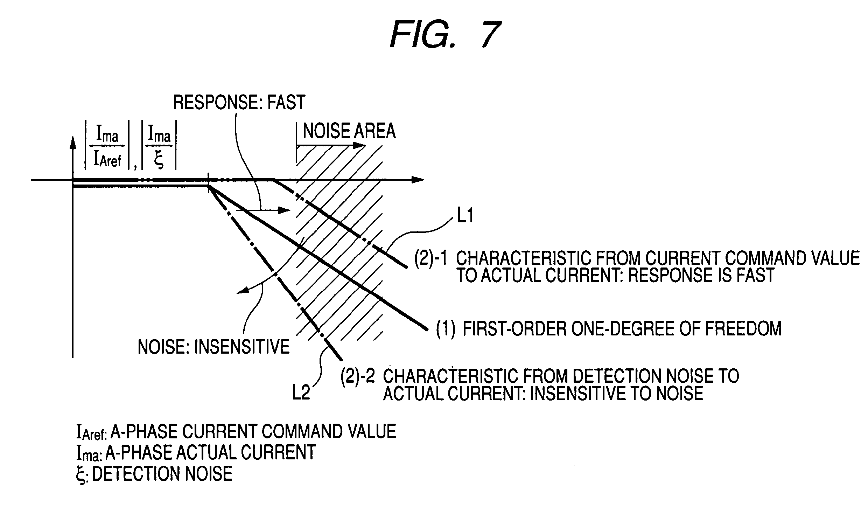

Next, the calculated phase current command values $I_{Aref}$, $I_{Bref}$, and $I_{Cref}$ are supplied to the prefilter 23, and the prefilter 23 subjects individually the phase current command values $I_{Aref}$, $I_{Bref}$, and $I_{Cref}$ to filter processing by the second-order transfer functions $C_{AA}(s)$, $C_{AB}(s)$ and $C_{AC}(s)$, whereby amplitude attenuation and phase lag of actual current are solved, and response can be improved as shown by a characteristic curve L1 shown by a chain-double-dashed line in Fig. 7. The phase current command values $I_{FAref}$, $I_{FBref}$ and $I_{FCref}$ after this filter processing are output to the motor feedback control part 24.

In this motor feedback control part 24, the Subtraction part 25 subtracts the motor drive current values Ima, Imb and Imc detected by the first detection part 19 from the phase current command values $I_{FAref}$, $I_{Fbref}$, and $I_{FCref}$ after the filter processing, which have been output from the prefilter 23, thereby to obtain current deviations $\Delta I_A$, $\Delta I_B$, and $\Delta I_c$. These current deviations $\Delta I_A$, $\Delta I_B$, and $\Delta I_c$ are supplied to the series compensator 26. Since this series compensator 26 has a finite gain, and a second-order transfer function of the series compensator 26 is set to the transfer function $C_B(s)$ represented by the aforesaid equation (10), it can calculate each-phase voltage command values $V_{Aref}$, $V_{Bref}$, and $V_{Cref}$ which can make the roll-off of the closed-loop characteristic fast as indicated by a characteristic curve L2 shown by chain lines in Fig. 7, so that it is possible to lower sensitivity for the detection noise, that is, to make the motor feedback control part insensitive for the detection noise.

The each-phase voltage command values $V_{Aref}$, $V_{Bref}$, and $V_{Cref}$ calculated by the series compensator 26 are supplied to the PWM control part 27, whereby this PWM control part 27 forms six pulse width modulation (PWM) signals according to the each-phase voltage command values $V_{Aref}$, $V_{Bref}$, and $V_{Cref}$, and supplies these pulse width modulation signals to each filed effect transistors Qau to Qcd of the inverter circuit 28. Hereby, three-phase drive currents Ima to Imc are supplied from this inverter circuit 28 to the electric motor 8 thereby to drive the rotation of the electric motor 8, and the electric motor 8 generates steering assist force according to the steering torque T applied to the steering wheel 2 and the speed Vs.

The steering assist force generated by this electric motor 8 is transmitted through the speed reducer 7 to the steering shaft 3, whereby the steering wheel 2 can be operated with lightweight steering force.

When the steering wheel 2 is operated in a state where the vehicle is stopped, that is, in a so-called static steering state, the speed Vs is zero and a gradient of the characteristic line of the current command value calculation map shown in Fig. 4 is large. Therefore, since the large current command value $I_{ref}$ is calculated with small steering torque T, the large steering assist force is generated by the electric motor 8 and the lightweight steering operation can be performed.

In the normal steering state in which the vehicle is started from the stopping state and put in a running state, and the steering wheel 2 is operated under this running state, it is necessary to reduce the steering assist torque according to increase of the speed. The steering torque to be transmitted to the steering wheel 2 is detected by the steering torque sensor 16 and input to the first generation part 21 of the control device 13. As shown in Fig. 4, since the map of the high speed is referred to, the current command value $I_{ref}$ becomes also small, so that the steering assist torque generated by the electric motor 8 becomes smaller than the steering assist torque during static steering.

Thus, according to the first exemplary embodiment, the current command value is subjected to the filter processing which solves the amplitude attenuation and phase lag of the actual current by the prefilter 23, whereby the frequency characteristic from the current command value to the actual current is adjusted and response can be improved. Further, the motor feedback control part 24 subtracts the motor actual currents from the current command values after the filter processing, thereby to obtain the current deviations $\Delta I_A$, $\Delta I_B$, and $\Delta I_C$. These current deviations $\Delta I_A$, $\Delta I_B$, and $\Delta I_C$ are compensated by the series compensator 26 which has the finite gain and the characteristic that the roll-off is fast, whereby the each-phase voltage command values $V_{Aref}$, $V_{bref}$, and $V_{Cref}$ are obtained. Therefore, the roll-off of the closed-loop characteristic can be made fast; sensitivity from the detection noise to the characteristic noise of the actual current can be made low; the sensitivity for the detection noise can be freely adjusted while improving the response of the current feedback control system; and the response can be improved while reducing vibration and motor noise due to the detection noise. As a result, good performance of steering assist control can be secured.

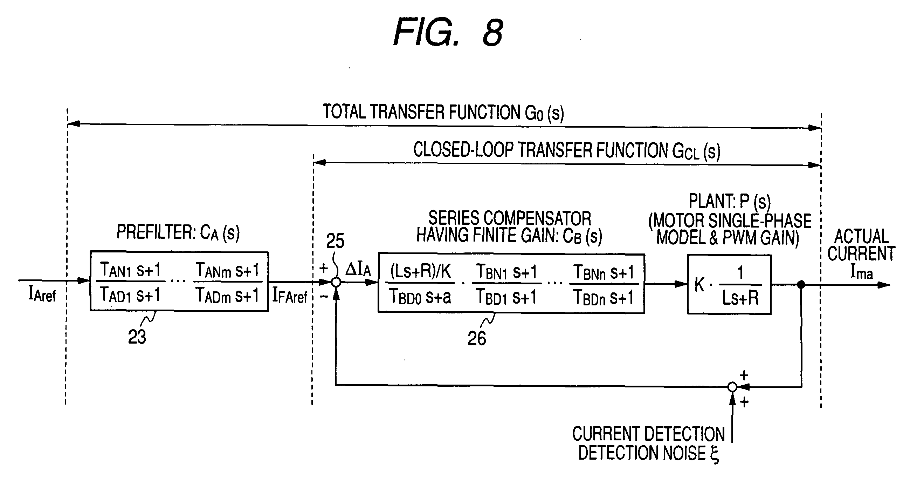

In the above embodiment, the case where the order of the prefilter 23 is taken as two has been described. However, the present invention is not limited to this case, but the order of the prefilter 23 can be set to any orders that are one or more, and order of the series compensator 26 can be also set similarly to any orders that are two or more. Next, a second exemplary embodiment of the invention will be described with reference to Fig. 8.

In this second exemplary embodiment, each of a prefilter 23 and a series compensator 26 is composed of a phase lead-lag compensator.

Namely, in the second exemplary embodiment, as shown in Fig. 8, a transfer function $C_A$(s) of the prefilter 23 is constituted by connecting two or more numbers of phase lead-lag elements in series, and a transfer function of the series compensator 26 is also constituted by connecting two or more numbers of phase lead-lag elements in series. Except this point, the second exemplary embodiment has the similar configuration to the configuration of the first exemplary embodiment, parts corresponding to those in Fig. 5 are denoted by the same characters, and their detailed description is omitted.

In the second exemplary embodiment, the transfer function $C_A$(s) of the prefilter 23 is constituted by connecting the phase lead-lag elements in series as shown by the following equation (14).

$$C_A(s) = \frac{T_{AN1}s+1}{T_{AD1}s+1} \times \cdots \times \frac{T_{ANm}s+1}{T_{ADm}s+1} \quad\quad ...(14)$$

Similarly, a transfer function $C_B$(s) of the series compensator 26 is constituted by connecting the phase lead-lag elements in series as shown by the following equation (15).

$$C_B(s) = \frac{(Ls+R)/K}{T_{BD0}s+a} \times \frac{T_{BN1}s+1}{T_{BD1}s+1} \times \cdots \times \frac{T_{BNn}s+1}{T_{BDn}s+1} \qquad \ldots(15)$$

The transfer function of the series compensator 26 is constituted by a phase lead-lag element including a reverse model of a plant $\{(Ls+R)/K\}/(T_{BD0}s+a)$, and n-numbers of lead-lag elements represented by $\{(T_{BN1}s+1) \ldots (T_{BNn}s+1)\}/\{ (T_{BD1}s+1) \ldots (T_{BDn}s+1)\}$. By a constant a of the phase lead-lag element including the reverse model of the plant, a gain of the series compensator 26 can be set to finite.

According to the second exemplary embodiment, by constituting the prefilter 23 by at least one number of phase lead-lag element, similarly to the case in the aforesaid first exemplary embodiment, the frequency characteristic from the current command value to the actual current can be adjusted so that amplitude attenuation and phase lag of actual current is solved, and response can be adjusted. Further, by constituting the series compensator 26 by plural number, that is, two or more numbers of phase lead-lag elements, roll-off characteristic of the closed-loop characteristic is made fast, whereby sensitivity for detection noise of a current feedback control system can be freely adjusted, and response can be improved while reducing vibration and motor noise due to the detection noise.

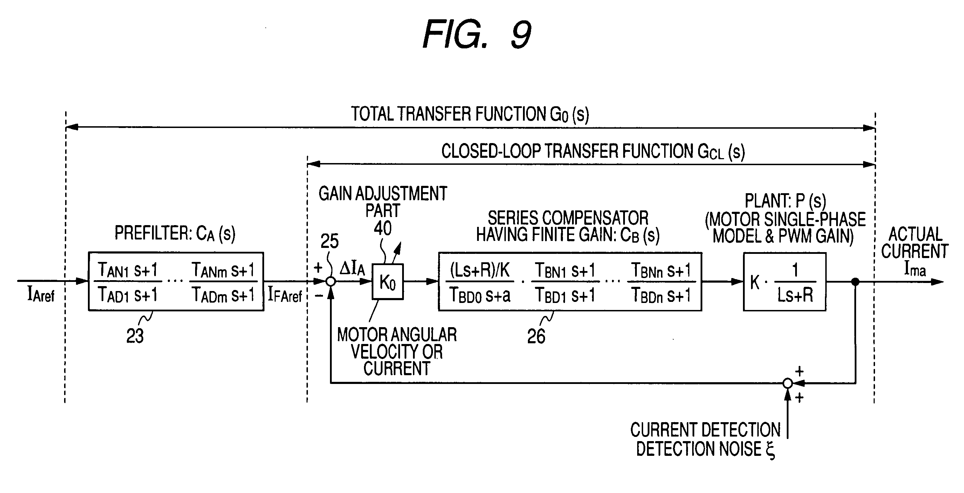

Next, a third exemplary embodiment of the invention will be described with reference to Fig. 9. In this third exemplary embodiment, since an influence by a quantization error in an A/D converter becomes large at the holding time of the steering wheel 2, this steering hold time is detected thereby to lower cut-off frequency of a closed-loop. Namely, the third exemplary embodiment, as shown in Fig. 9, except that a gain adjustment part 40 which performs gain adjustment on the basis of a motor angular velocity is interposed between a subtraction part 25 and a series compensator 26, has the similar configuration to the configuration in the second exemplary embodiment. In Fig. 9, parts corresponding to those in Fig. 8 are denoted by the same characters, and their detailed description is omitted here.

Into the gain adjustment part 40, a motor angular velocity $\overline{\omega}_m$ calculated by a second detection part 20 is input, and the gain adjustment part 40 judges whether or not this motor angular velocity $\overline{\omega}_m$ is smaller than a steering hold state judging threshold $\overline{\omega}_{th}$ which has been previously set. When the motor angular velocity $\overline{\omega}_m$ is equal to or larger than the steering hold state judging threshold $\overline{\omega}_{th}$, the gain adjustment part 40 judges the present state to be a steering state in which the steering wheel 2 is being operated and sets a gain $K_0$ to "1". When the motor angular velocity $\overline{\omega}_m$ is smaller than the steering hold state judging threshold $\overline{\omega}_{th}$, the gain adjustment part 40 judges the present state to be a steering hold state and sets the gain $K_0$ to a minimum value $K_{MIN}$.

According to the third exemplary embodiment, when a driver operates the steering wheel 2 and the motor angular velocity $\overline{\omega}_m$ is equal to or larger than the steering hold state judging threshold $\overline{\omega}_{th}$, the gain $K_0$ of the gain adjustment part 40 is set to "1", whereby current deviations $\Delta I_A$, $\Delta I_B$, and $\Delta I_c$ calculated by the Subtraction part 25 are supplied to the series compensator 26 as they are. Therefore, the working effect similar to that in the aforesaid second exemplary embodiment can be obtained.

However, when the driver puts the steering wheel 2 in the steering hold state and resultantly the motor angular velocity $\overline{\omega}_m$ becomes smaller than the steering hold state judging threshold $\overline{\omega}_{th}$, the gain $K_0$ of the gain adjustment part 40 is set to the minimum value $K_{MIN}$. Therefore, the cut-off frequency of a closed-loop can be decreased, the influence by the quantization error produced in the A/D converter or the like at the steering hold time can be surely prevented, and exact steering assist control can be executed.

While the above third exemplary embodiment has been described in connection with the case where whether or not the present state is the steering hold state is judged on the basis of the motor angular velocity $\overline{\omega}_m$, the present invention is not limited to this case. When all the change amounts of the motor drive currents Ima to Imc detected by a first detection part 19 for detecting the motor current are smaller than a steering hold state judging threshold Ith, this state may be judged to be the steering hold state and the gain $K_0$ may be decreased from "1" to the minimum value $K_{MIN}$. Further, a current command value $I_{ref}$ or each-phase current command values $I_{Aref}$, $I_{Aref}$ and $I_{Aref}$ may be used for the steering hold state judgment.

Further, since the vibration produced at the steering hold time is strong at the high current time, a judgment condition of whether or not the current command value $I_{ref}$ is the predetermined value or more may be added. Namely, when the current command value $I_{ref}$ is a predetermined value or more, and the motor angular velocity $\overline{\omega}_m$ or all the change amounts of the motor drive currents Ima to Imc is smaller than the predetermined threshold $\overline{\omega}_{th}$ or Ith, this state may be judged to be the steering hold state, and the gain $K_0$ may be changed from "1" to the minimum value $K_{MIN}$.

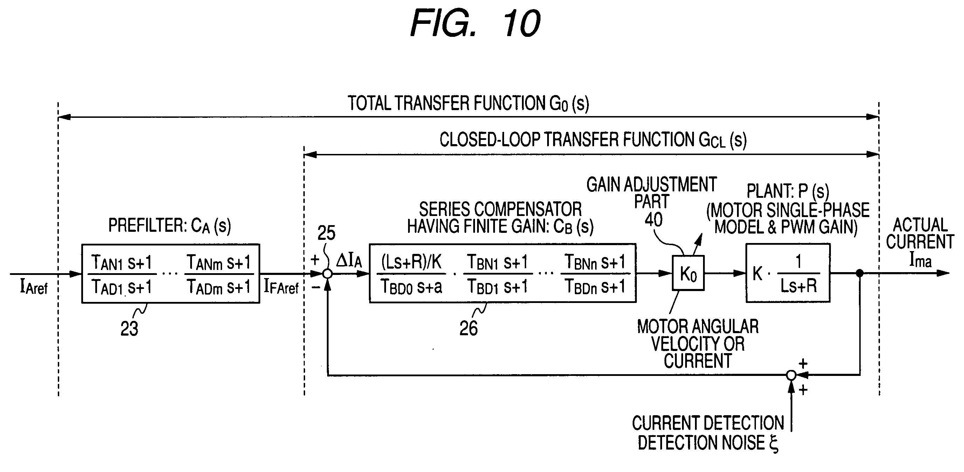

Furthermore, while the third exemplary embodiment has been described in connection with the case where the gain adjustment for the current deviations $\Delta I_A$, $\Delta I_B$, and $\Delta I_c$ is performed, the present invention is not limited to this case. As shown in Fig. 10, the gain adjustment part 40 may be provided on the output side of the series compensator 26 to judge the steering hold state on the basis of the motor angular velocity $\overline{\omega}_m$ or the motor drive currents Ima to Imc and change the gain $K_0$ from "1" to the minimum value $K_{MIN}$ in the steering hold state. In this case, the working effect similar to that in the above third exemplary embodiment can be obtained.

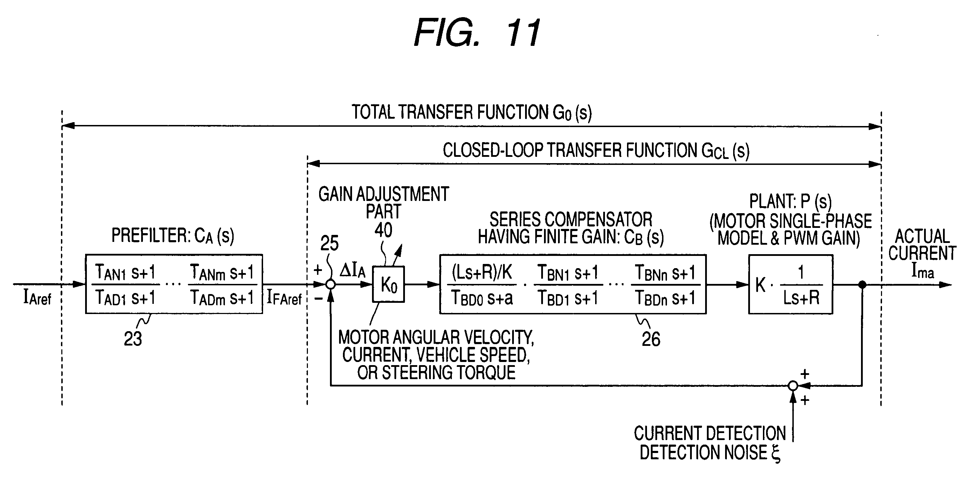

Next, a fourth exemplary embodiment of the invention will be described with referent to Fig. 11.

In this fourth exemplary embodiment, since sensibility for vibration or noise changes according to a speed Vs of a vehicle or a steering torque of a driver, the change of sensibility is provided as an additional condition for the gain adjustment.

Namely, in the fourth exemplary embodiment, under the configuration in the third exemplary embodiment shown in Fig. 9, in addition to the motor angular velocity $\overline{\omega}_m$ or the motor drive currents Ima to Imc, a speed Vs detected by a speed detection part 18 or a steering torque T detected by a steering torque sensor 16 are inputted to the gain adjustment part 40. When the speed Vs is a set speed Vth or higher, since engine noise, wind noise, and road noise are large thereby to cause a large vehicle room noise, it is judged that influences by the motor noise and the vibration in the steering hold state are few, and a gain $K_0$ is set to an intermediate gain between "1" and the minimum value $K_{MIN}$. Hereby, without decreasing the gain $K_0$ to the minimum value $K_{MIN}$, the current feedback control is executed. Similarly, when the steering torque T is large, since the vehicle is put in the static steering state under the stopping state, or in the steering state at the very low-speed running time such as at the time of putting the vehicle into a garage, it is judged that the driver is sensitive to motor noise and vibration, and the gain $K_0$ is decreased to the minimum value $K_{MIN}$. When the steering torque T is small, it is judged that the vehicle is running at a comparatively high speed, and the gain $K_0$ is set to the intermediate value between "1" and the minimum value $K_{MIN}$. Therefore, according to sensibility of the driver, the gain $K_0$ can be adjusted.

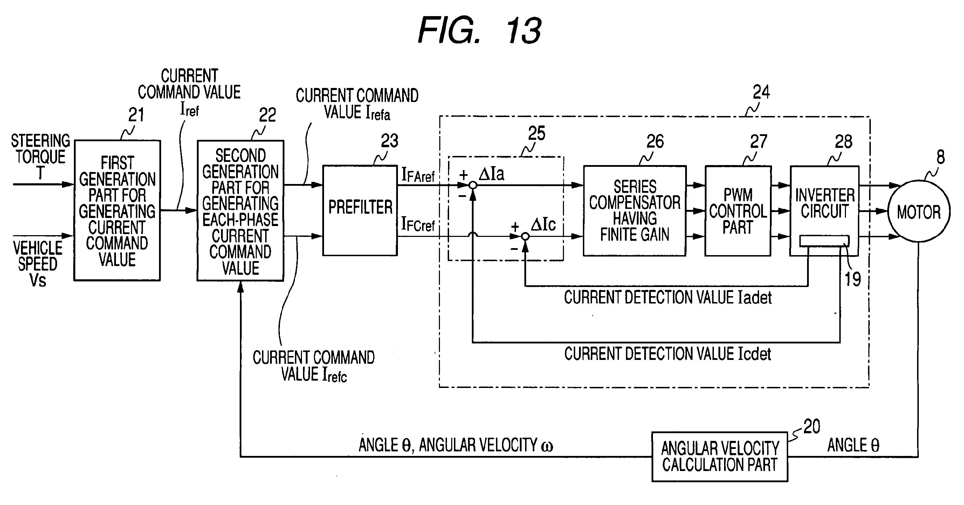

Next, a fifth exemplary embodiment of the invention will be described with reference to Figs. 13 to 15.

In this fifth exemplary embodiment, the drive of an electric motor 8 composed of three-phase brushless motor is two-phase controlled.

Namely, in the fifth exemplary embodiment, as shown in Fig. 13, under the configuration in the aforesaid first exemplary embodiment shown in Fig. 2, only an A-phase current command value $I_{Aref}$ and a C-phase current command value $I_{Cref}$ are outputted from an second generation part 22 for generating an each-phase current command value to a prefilter 23. The phase current command values $I_{FAref}$ and $I_{FCref}$ outputted from the prefilter 23 after filtering are supplied to a subtraction part 25 of a motor feedback control part 24. Current detection values Ima and Imc are subtracted from the phase current command values $I_{FAref}$ and $I_{FCref}$ thereby to obtain current deviations $\Delta I_A$ and $\Delta I_C$. The current deviations $\Delta I_A$ and $\Delta I_c$ are supplied to a series compensator 26 having the finite gain. The series compensator 26 outputs three-phase voltage command values $V_{Aref}$, $V_{Bref}$ and $V_{Cref}$ to the PWM control part 27. Except for the above point, since the fifth exemplary embodiment has the similar configuration to the aforesaid configuration shown in Fig. 2, parts corresponding to those in Fig. 2 are denoted by the same characters, and the detailed description is omitted.

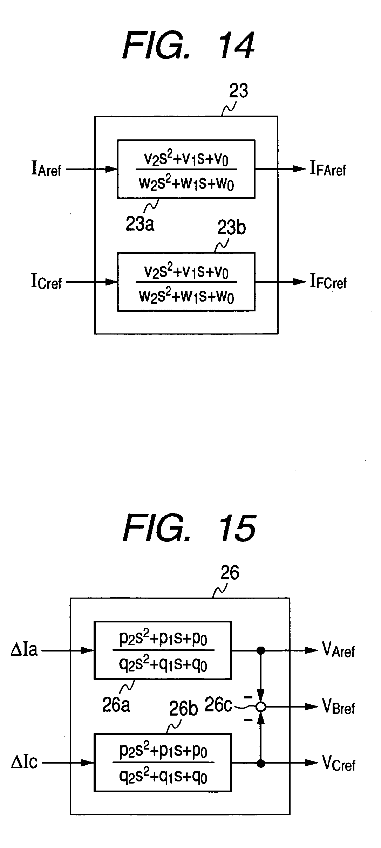

Here, the prefilter 23 is, as shown in Fig. 14, composed of two filter parts 23a and 23b which are respectively set to the transfer function $C_A(s)$ represented by the aforesaid equation (1) so as to subject the inputted phase current command values $I_{FAref}$ and $I_{FCref}$ individually to prefiltering operation.

Further, the series compensator 26, as shown in Fig. 15, includes two series compensation parts 26a and 26b, and an adder 26c. The series compensation parts 26a and 26b subject individually the current deviations $\Delta I_A$ and $\Delta I_c$ to be input from the subtraction part 25 to series compensation processing, have respectively a finite gain, and are set to the transfer function $C_B(s)$ represented by the aforesaid equation (2). The adder 26c performs calculation of (-$V_{Aref}$ -$V_{Cref}$) in relation to the phase voltage command values $V_{Aref}$ and $V_{Cref}$ outputted from these series compensation parts 26a and 26b on the basis of a relation that the total of the phase voltages is zero, thereby to obtain a phase voltage command values $V_{Bref}$.

According to the fifth exemplary embodiment, the working effect similar to that in the first exemplary embodiment can be obtained. In addition, when the drive of the electric motor 8 is controlled, the feedback control of the two phases ( A-phase and B-phase of the three phases) is performed, whereby it is possible to reduce a calculation load in case that the control device is constituted by the processor.

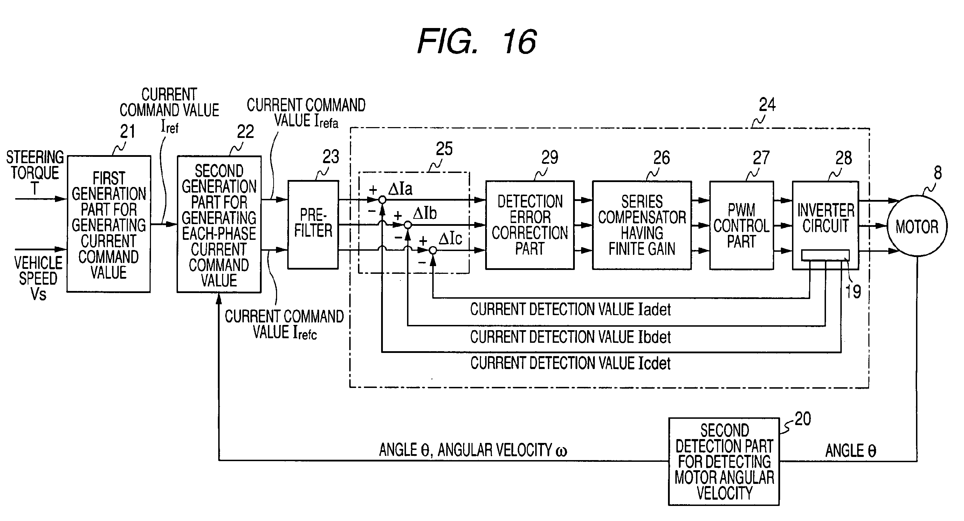

Next, a sixth exemplary embodiment of the invention will be described with reference to Figs. 16 to 19.

By the two-phase control in the fifth exemplary embodiment, in the B phase in which control is not performed, noises due to detection errors and quantization errors in other phases accumulates, so that the motor noise is generated or torque ripple become large. In this sixth exemplary embodiment, these disadvantages are solved.

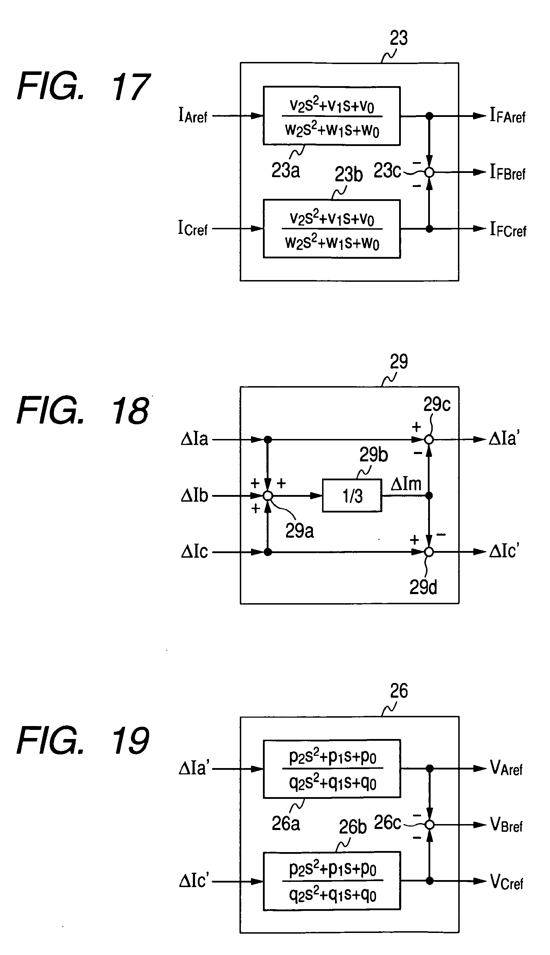

Namely, in the sixth exemplary embodiment shown in Fig. 16, a prefilter 23 is, as shown in Fig. 17, composed of two filters part 23a and 23b, which is similar to the case in the aforesaid fifth exemplary embodiment. Further, the prefilter includes an adder 26c which performs calculation of (-$I_{FAref}$ -$I_{FCref}$) in relation to these filter outputs $I_{FAref}$ and $I_{FCref}$ on the basis of a relation that the total of the phase currents is zero, thereby to obtain a filter output $I_{FBref}$.

Further, a subtraction part 25 of a motor feedback control part 24 is so constituted as to obtain current deviations $\Delta Ia$, $\Delta Ib$ and $\Delta Ic$ by subtracting the current detection values Ima, Imb, and Imc detected by a first detection part 19 for detecting the motor current from the filter outputs $I_{FAref}$, $I_{FBref}$, and $I_{FCref}$ outputted from the prefilter.

Further, between the subtraction part 25 and a series compensator 26 of the motor feedback control part 24, a detection error correction part 29 is interposed. This detection error correction part 29, as shown in Fig. 18, includes an adder 29a which adds the current deviations $\Delta Ia$, $\Delta Ib$ and $\Delta Ic$ outputted from the subtraction part 25; an average value calculation part 29b which calculates an average value $\Delta Im$ of the sum of the current deviations $\Delta Ia$, $\Delta Ib$ and $\Delta Ic$ outputted from the

subtraction part 25; and adders 29c and 29d which add the average value ΔIm calculated by this average value calculation part 29b to the filter outputs $I_{FAref}$ and $I_{FCref}$.

Furthermore, the series compensator 26 of the motor feedback control part 24, as shown in Fig. 19, includes, similarly to the case in the fifth exemplary embodiment, series compensation parts 26a and 26b, and an adder 26c. The series compensation parts 26a and 26b subject the inputted current error compensating values ΔIa' and ΔIc' to series compensation processing thereby to obtain voltage command values $V_{Aref}$ and $V_{Cref}$. The adder 26c calculates a voltage command value $V_{Bref}$ on the basis of the voltage command values $V_{Aref}$ and $V_{Cref}$ outputted from these series compensation parts 26a and 26b.

According to this sixth exemplary embodiment, in the adder 23c of the prefilter 23, on the basis of the A-phase filter output $I_{FAref}$ and the C-phase filter output $I_{FCref}$, a B-phase filter output $I_{FBref}$ is calculated, whereby the filter output of the prefilter 23 is made the three-phase filter outputs $I_{FAref}$, $I_{FBref}$ and $I_{FCref}$.

These three-phase filter outputs $I_{FAref}$, $I_{FBref}$ and $I_{FCref}$ are supplied to the subtraction part 25. The current deviations ΔIa, ΔIb and ΔIc are obtained by subtracting the current detection values Ima, Imb and Imc detected by the first detection part 19 from the three-phase filter outputs $I_{FAref}$, $I_{FBref}$ and $I_{FCref}$. The obtained three-phase current deviations ΔIa, ΔIb and ΔIc are supplied to the detection error correction part 29. The sum of the current deviations ΔIa, ΔIb and ΔIc are calculated by the adder 29a. The average value ΔIm of this sum is calculated by the average value calculation part 29b. The calculated average value ΔIm is added to the current deviations ΔIa and ΔIc. Thus, the error can be dispersed in these current deviations ΔIa and ΔIc.

Therefore; generation of wavy noise can be restrained, and torque ripple can be reduced.

While the fifth and sixth exemplary embodiments have been described in connection with the case where the two-phase control of A-phase and B-phase is performed, the present invention is not limited to this case, but two-phase control of A-phase and B-phase or two-phase control of B-phase and C-phase may be performed.

Further, while the fifth and sixth exemplary embodiments have been described in connection with the case where the electric motor 8 is the three-phase brushless motor, the present invention is not limited to this case, but the present invention can be applied also to a multi-phase brushless motor of four-phase or more. Namely, the present invention can be applied to an n-phase electric motor (n is an integral number of 3 or more).

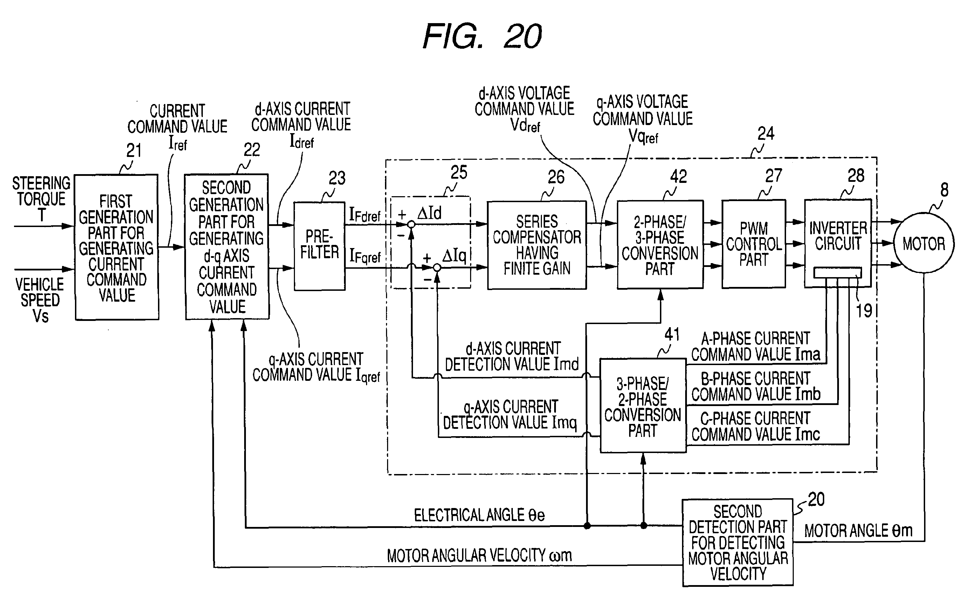

Next, a seventh exemplary embodiment of the invention will be described with reference to Fig. 20.

In this seventh exemplary embodiment, in case that an electric motor 8 in which a harmonic component is included in electromotive force is driven, generation of torque ripple or motor noise due to noises of current detection error and quantization error is restrained.

Namely, in the seventh exemplary embodiment, as shown in Fig. 20, an second generation part 22 generating d-q axis current command value is so constituted that: the two-phase/three-phase conversion part 34 in the first exemplary embodiment shown in Fig. 3 is omitted; and a d-axis current command value Idref calculated by a third calculation part 31 for calculating d-axis current command value and a q-axis current command value Iqref calculated by a fifth calculation 33 part for calculating q-axis current command value are output to a prefilter 23 as they are.

The d-axis current command value Idref and the q-axis current command value Iqref are subjected to filtering processing in a prefilter 23, thereby to adjust response from the d-axis current command value Idref and the q-axis current command value Iqref to the actual current, and thereafter filter outputs $I_{Fdref}$ and $I_{Fqref}$ are output to a subtraction part 25 of a motor feedback control part 24.

On the other hand, current detection values Ima, Imb and Ibc detected by a first detection 19 for detecting the motor current are converted into a d-axis current detecting value Imd and a q-axis current detecting value Imq by a three-phase/two-phase conversion part 41, and these d-axis current detecting value Imd and q-axis current detecting value Imq are supplied to the subtraction part 25.

The Subtraction part 25 calculates a d-axis current deviation ΔId and a q-axis current deviation ΔIq. These d-axis current deviation ΔId and q-axis current deviation ΔIq are supplied to a series compensator 26 having the increased order. This series compensator 26 subjects the d-axis current deviation ΔId and q-axis current deviation ΔIq to series compensation processing thereby to calculate a d-axis voltage command value $V_{dref}$ and a q-axis voltage command value $V_{qref}$. These d-axis voltage command value $V_{dref}$ and q-axis voltage command value $V_{qref}$ are converted into three-phase voltage command values $V_{Aref}$, $V_{Bref}$ and $V_{Cref}$ by a two-phase/three-phase conversion part 42. The three-phase voltage command values $V_{Aref}$, $V_{Bref}$ and $V_{Cref}$ are supplied to a PWM control part 27.

According to this seventh exemplary embodiment, in case that the electric motor 8 in which the harmonic component is included in electromotive force is driven, when d-q coordinates transformation is performed in the first generation part 21, the harmonic components are included resultantly in the d-axis current command value $I_{dref}$ and the q-axis current command value $I_{qref}$.

Therefore, in order to make sensitivity from the detection noise slow, it is necessary to decrease response of the control system. To the contrary, attenuation of the harmonic components in the d-axis current command value $I_{dref}$ and the q-axis current command value $I_{qref}$ become strong, so that torque ripple and noise are generated.

However, in the above seventh exemplary embodiment, since the d-axis current deviation ΔId and the q-axis current deviation ΔIq are supplied to the series compensator 26 having the increased order, this series compensator 26 makes a roll-off characteristic fast, and voltage command values $V_{dref}$ and $V_{qref}$ in which the sensitivity from the detection noise is made low can be obtained. These voltage command values $V_{dref}$ and $V_{qref}$ are converted into three-phase voltage command values $V_{Aref}$, $V_{Bref}$ and $V_{Cref}$ in the two-phase/three-phase converting part 42.

By thus making the sensitivity from the detection noise low by the series compensator 26, the response is lowered. However, this lowering of response can be improved by adjusting the response from the d-axis current command value $I_{dref}$ and the q-axis current command value $I_{qref}$ to the actual current by the prefilter 23.

As a result, also in the motor feedback control of the d-q coordinates type, while keeping follow-up performance, the noise can be reduced, and the generation of the torque ripple and motor noise can be suppressed.

While the above seventh exemplary embodiment have been described in connection with the case where the three-phase brushless motor 8 is drive, the present invention is not limited to this case, but the present invention can be applied also to a multi-phase brushless motor of four- phase or more. In this case, multi-phase current detection values detected by the first detection 19 should be converted into a d-axis current detection value Idm and a q-axis current detection value Iqm by a multi-phase/two-phase converting part.

Further, while the first to seventh exemplary embodiments have been described in connection with the case where the motor angular velocity $\overline{\omega}_m$ is calculated on the basis of the rotation angle detecting signal of the motor angle detector 17, the present invention is not limited to this case, but a motor counter-electromotive-voltage is presumed from a terminal voltage of the electric motor 8, and the motor angular velocity $\overline{\omega}_m$ may be presumed on the basis of the presumed motor counter-electromotive-voltage.

Further, while the first to seventh exemplary embodiments have been described in connection with the case where the invention is applied to the electric power steering, the present invention is not limited to this case, but the present invention can be applied to drive control of an electric motor used in an electric braking device, an electric telescopic device, an electric tilt device, or any devices other than the vehicle mounting device.

**Claims**

1. A motor drive control device comprising:

   a generation part for generating a current command value;
   a current detection part for detecting a drive current of an electric motor;
   a motor feedback control part for controlling feedback of the electric motor based on the current command value and a drive current detection value;
   a prefilter with order of one or more, for adjusting the current command value, said prefilter being interposed between the generation part and the motor feedback control part; and
   a series compensator with order of two or more, for determining a voltage command value of the motor feedback control part based on the current command value adjusted by the prefilter and the drive current detection value of the electric motor.

2. The motor drive control device according to Claim **1**, wherein
   the prefilter has the configuration in which one or more phase lead-lag compensators for adjusting the current command value are connected in series, and
   the series compensator has the configuration in which two or more phase lead-lag compensators for determining the voltage command value are connected in series.

3. The motor drive control device according to one of Claims 1 and 2, wherein
   the series compensator has a finite gain.

4. A motor drive control device comprising:

   a current detection part for detecting drive currents of (n-1) phases of an n-phase electric motor, n being an integer of 3 or more;
   a generation part for generating current command values of (n-1) phases;
   a motor feedback control part for controlling feedback of the electric motor based on the current command values and drive current detection values;
   a prefilter with order of one or more for adjusting the (n-1) current command values, said prefilter being interposed between the generation part and the motor feedback control part; and
   a series compensator with order of two or more for determining a voltage command value of the motor feedback control part based on the (n-1) current command values adjusted by the prefilter and the drive current detection values of (n-1) phases of the n-phase electric motor.

5. A motor drive control device comprising:

current detection parts for detecting drive currents of n-phases of an n-phase electric motor, n being an integer of 3 or more;
a generation part for generating current command values of (n-1) phases;
a motor feedback control part for controlling feedback of the electric motor based on the current command values and drive current detection values;
a set of prefilters with order of one or more for adjusting the (n-1) current command values, said prefilters being interposed between the generation part and the motor feedback control part; and
a filter output forming part for forming filter output of remaining one-phase by summing up filter outputs from the prefilters, wherein
the motor feedback control part includes:

deviation calculation parts for calculating deviations of n-phases between the filter outputs from the prefilters and the filter outputs formed by the filter output forming part, and drive current detection values of n-phases of the n-phase electric motor;
current deviation correction parts for correcting current deviations of (n-1) phases based on average values of the deviations of n-phases outputted from the deviation calculation parts;
(n-1) series compensators which have order of two or more and a finite gain, and apply compensations to the corrected current deviations of (n-1) phases outputted from the current deviation correction parts; and
compensation value forming parts for forming a compensation value of remaining one-phase by summing up compensation values of (n-1) phases of the series compensators.

6. A motor drive control device comprising:

current detection parts for detecting drive currents of n-phases of an n-phase electric motor, n being an integer of 3 or more, to convert the detected drive current values into a d-q axis current detection value by which the electric motor rotates at a frequency corresponding to an angular velocity thereof;
a generation part for generating a d-q axis current command value, said generation part determining a command value at the d-q axis coordinates;
a motor feedback control part for controlling feedback of the electric motor based on the d-q axis current command value and the d-q axis current detection value;
a set of prefilters with order of one or more for adjusting the d-q axis current command value, said prefilters being interposed between the generation part and the motor feedback control part;
a set of series compensators which have order of two or more and a finite gain, and determines a voltage command value of the motor feedback control part based on the d-q axis current command value adjusted by the prefilters and the d-q axis drive current detection value; and
two-phase/n-phase conversion parts for applying 2-phase/n-phase conversion to compensation output from the series compensators.

7. The motor drive control device according to one of Claims 1 to 6, further comprising:

an angular velocity detector for detecting an angular velocity of the electric motor; wherein
the motor feedback control part includes either of a gain and a filter which increases or decrease a current deviation between the adjusted current command value and the drive current detection value; and
the motor feedback control part adjusts either of the gain and the filter based on at least one of the angular velocity of the electric motor, the current command value, and the drive current detection value.

8. The motor drive control device according to one of Claims 1 to 6, wherein
the motor feedback control part includes either of a gain and a filter which increases or decrease output of the series compensator, and
the motor feedback control part adjusts either of the gain and the filter based on at least one of the angular velocity of the electric motor, the current command value, and the drive current detection value.

9. The motor drive control device according to one of Claims 1 to 8, wherein

each of the prefilter and the series compensator have a constant which is determined at least in accordance with a time delay of a current control system.

10. The motor drive control device according to one of Claims 1 to 9, wherein
the electric motor is a brushless motor.

11. The motor drive control device according to one of Claims 1 to 10, wherein an electromotive force of the electric motor is set to either of a rectangular wave electromotive force and a quasi-rectangular electromotive force including a harmonic component in sine wave.

12. A motor drive control method comprising the steps of:

adjusting a current command value generated by a generation part and inputted to an electric motor, by a prefilter having order of one or more; and
determining a voltage command value for the electric motor, based on a current deviation between the adjusted current command value and the drive current detection value of the electric motor, by a series compensator having order of two or more.

13. The motor drive control method according to Claim 12, wherein
the prefilter has the configuration in which one or more phase lead-lag compensators for adjusting the current command value are connected in series, and
the series compensator has the configuration in which two or more phase lead-lag compensators for determining the voltage command value are connected in series.

14. The motor drive control method according to one of Claims 12 and 13, wherein
the series compensator has a finite gain.

15. The motor drive control method according to one of Claims 12 to 14, wherein
each of the prefilter and the series compensator have a constant which is determined at least in accordance with a time delay of a current control system.

16. An electric power steering device, wherein
a drive of an electric motor which generates steering assist force for a steering system is controlled by a motor drive control device, said motor drive control device comprising:

a generation part for generating a current command value;
a current detection part for detecting a drive current of an electric motor;
a motor feedback control part for controlling feedback of the electric motor based on the current command value and a drive current detection value;
a prefilter with order of one or more for adjusting the current command value, said prefilter being interposed between the generation part and the motor feedback control part; and
a series compensator with order of two or more for determining a voltage command value of the motor feedback control part based on the current command value adjusted by the prefilter and the drive current detection value of the electric motor.

17. An electric power steering device comprising:

at least one of a speed detection part which detects speed of a vehicle and a steering torque detection part which detects steering torque applied to a steering system;
an electric motor which generates steering assist force for the steering system; and
a motor drive control device which controls drive of the electric motor, the motor drive control device comprising:

a generation part for generating a current command value;
a current detection part for detecting a drive current of an electric motor;
a motor feedback control part for controlling feedback of the electric motor based on the current command value and a drive current detection value;
a prefilter with order of one or more for adjusting the current command value, said prefilter being interposed between the generation part and the motor feedback control part; and

a series compensator with order of two or more for determining a voltage command value of the motor feedback control part based on the current command value adjusted by the prefilter and the drive current detection value of the electric motor, wherein

the motor feedback control part of the motor drive control device includes either of a gain and a filter which increases and decreases a current deviation between the adjusted current command value and the drive current detection value, and
the motor feedback control part adjusts either of the gain and filter by at least one of the speed, the steering torque, an angular velocity of the electric motor, the current command value and the drive current detection value.

18. An electric power steering device comprising:

at least one of a speed detection part which detects speed of a vehicle and a steering torque detection part which detects steering torque applied to a steering system;
an electric motor which generates steering assist force for the steering system; and
the motor drive control device which controls drive of the electric motor, the motor drive control device comprising:

a generation part for generating a current command value;
a current detection part for detecting a drive current of an electric motor;
a motor feedback control part for controlling feedback of the electric motor based on the current command value and a drive current detection value;
a prefilter with order of one or more for adjusting the current command value, said prefilter being interposed between the generation part and the motor feedback control part; and
a series compensator with order of two or more for determining a voltage command value of the motor feedback control part based on the current command value adjusted by the prefilter and the drive current detection value of the electric motor, wherein

the motor feedback control part of the motor drive control device includes either of a gain and a filter which increases and decreases outputs of the series compensator, and
the motor feedback control part adjusts either of the gain and filter by at least one of the speed, the steering torque, an angular velocity of the electric motor, the current command value and the drive current detection value.

## FIG. 1

EP 1 914 878 A2

## FIG. 2

STEERING TORQUE T → 

VEHICLE SPEED Vs →

**21** FIRST GENERATION PART FOR GENERATING CURRENT COMMAND VALUE

CURRENT COMMAND VALUE $I_{ref}$

**22** SECOND GENERATION PART FOR GENERATING EACH-PHASE CURRENT COMMAND VALUE

A-PHASE CURRENT COMMAND VALUE $I_{Aref}$

B-PHASE CURRENT COMMAND VALUE $I_{Bref}$

C-PHASE CURRENT COMMAND VALUE $I_{Cref}$

**23** PREFILTER

$I_{FAref}$
$I_{FBref}$
$I_{FCref}$

**24** MOTOR FEEDBACK CONTROL PART

**25** 
$+$ $\Delta I_A$
$-$ $+$ $\Delta I_B$
$-$ $+$ $\Delta I_C$
$-$

**26** SERIES COMPENSATOR HAVING FINITE GAIN

**27** PWM CONTROL PART

**28** INVERTER CIRCUIT

**8** MOTOR

**19**

CURRENT DETECTION VALUE Imc
CURRENT DETECTION VALUE Imb
CURRENT DETECTION VALUE Ima

**20** SECOND DETECTION PART FOR DETECTING MOTOR ANGULAR VELOCITY

ELECTRICAL ANGLE θe, MOTOR ANGULAR VELOCITY ωm

ANGLE θm

EP 1 914 878 A2

FIG. 3

EP 1 914 878 A2

# FIG. 4

# FIG. 5

TOTAL TRANSFER FUNCTION $G_0$ (s)

CLOSED-LOOP TRANSFER FUNCTION $G_{CL}$ (s)

PREFILTER: $C_A$ (s)

SERIES COMPENSATOR HAVING FINITE GAIN: $C_B$ (s)

PLANT: P (s) (MOTOR SINGLE-PHASE MODEL & PWM GAIN)

ACTUAL CURRENT $I_{ma}$

$I_{Aref}$

$$\frac{v_2s^2+v_1s+v_0}{w_2s^2+w_1s+w_0}$$

23

$I_{FAref}$

25

$+$ $\Delta I_A$ $-$

$$\frac{p_2s^2+p_1s+p_0}{q_2s^2+q_1s+q_0}$$

26

$$K \cdot \frac{1}{Ls+R}$$

$+$ $+$

CURRENT DETECTION DETECTION NOISE $\xi$

EP 1 914 878 A2

FIG. 6

## FIG. 7

RESPONSE: FAST

NOISE AREA

$\left|\dfrac{I_{ma}}{I_{Aref}}\right|, \left|\dfrac{I_{ma}}{\xi}\right|$

L1

(2)-1 CHARACTERISTIC FROM CURRENT COMMAND VALUE TO ACTUAL CURRENT: RESPONSE IS FAST

(1) FIRST-ORDER ONE-DEGREE OF FREEDOM

NOISE: INSENSITIVE

L2

(2)-2 CHARACTERISTIC FROM DETECTION NOISE TO ACTUAL CURRENT: INSENSITIVE TO NOISE

$I_{Aref}$: A-PHASE CURRENT COMMAND VALUE
$I_{ma}$: A-PHASE ACTUAL CURRENT
$\xi$: DETECTION NOISE

EP 1 914 878 A2

# FIG. 8

EP 1 914 878 A2

TOTAL TRANSFER FUNCTION $G_0$ (s)

CLOSED-LOOP TRANSFER FUNCTION $G_{CL}$ (s)

PREFILTER: $C_A$ (s)

SERIES COMPENSATOR
HAVING FINITE GAIN: $C_B$ (s)

PLANT: P (s)
(MOTOR SINGLE-PHASE
MODEL & PWM GAIN)

ACTUAL
CURRENT
$I_{ma}$

$I_{Aref}$

$$\frac{T_{AN1} s+1}{T_{AD1} s+1} \cdots \frac{T_{ANm} s+1}{T_{ADm} s+1}$$

$I_{FAref}$

25

+
−

$\Delta I_A$

$$\frac{(Ls+R)/K}{T_{BD0} s+a} \cdot \frac{T_{BN1} s+1}{T_{BD1} s+1} \cdots \frac{T_{BNn} s+1}{T_{BDn} s+1}$$

$$K \cdot \frac{1}{Ls+R}$$

23

26

+
+

CURRENT DETECTION
DETECTION NOISE ξ

## FIG. 9

TOTAL TRANSFER FUNCTION $G_0$ (s)

CLOSED-LOOP TRANSFER FUNCTION $G_{CL}$ (s)

GAIN ADJUSTMENT PART
40

SERIES COMPENSATOR HAVING FINITE GAIN: $C_B$ (s)

PLANT: P (s) (MOTOR SINGLE-PHASE MODEL & PWM GAIN)

PREFILTER: $C_A$ (s)

ACTUAL CURRENT $I_{ma}$

25

$I_{Aref}$

$$\frac{T_{AN1} \, s+1}{T_{AD1} \, s+1} \cdots \frac{T_{ANm} \, s+1}{T_{ADm} \, s+1}$$

$I_{FAref}$

$+$ $\Delta I_A$

$-$

$K_0$

$$\frac{(Ls+R)/K}{T_{BD0} \, s+a} \cdot \frac{T_{BN1} \, s+1}{T_{BD1} \, s+1} \cdots \frac{T_{BNn} \, s+1}{T_{BDn} \, s+1}$$

$$K \cdot \frac{1}{Ls+R}$$

23

MOTOR ANGULAR VELOCITY OR CURRENT

26

$+$
$+$

CURRENT DETECTION DETECTION NOISE $\xi$

EP 1 914 878 A2

# FIG. 10

TOTAL TRANSFER FUNCTION $G_0(s)$

CLOSED-LOOP TRANSFER FUNCTION $G_{CL}(s)$

PREFILTER: $C_A(s)$

SERIES COMPENSATOR HAVING FINITE GAIN: $C_B(s)$

GAIN ADJUSTMENT PART 40

PLANT: $P(s)$ (MOTOR SINGLE-PHASE MODEL & PWM GAIN)

ACTUAL CURRENT $I_{ma}$

$I_{Aref}$

$$\frac{T_{AN1}\,s+1}{T_{AD1}\,s+1} \cdots \frac{T_{ANm}\,s+1}{T_{ADm}\,s+1}$$

$I_{FAref}$

25

$\Delta I_A$

$$\frac{(Ls+R)/K}{T_{BD0}\,s+a} \cdot \frac{T_{BN1}\,s+1}{T_{BD1}\,s+1} \cdots \frac{T_{BNn}\,s+1}{T_{BDn}\,s+1}$$

$K_0$

$$K \cdot \frac{1}{Ls+R}$$

23

26

MOTOR ANGULAR VELOCITY OR CURRENT

CURRENT DETECTION DETECTION NOISE $\xi$

EP 1 914 878 A2

## FIG. 11

TOTAL TRANSFER FUNCTION $G_0$ (s)

CLOSED-LOOP TRANSFER FUNCTION $G_{CL}$ (s)

PREFILTER: $C_A$ (s)

GAIN ADJUSTMENT PART 40

SERIES COMPENSATOR HAVING FINITE GAIN: $C_B$ (s)

PLANT: P (s) (MOTOR SINGLE-PHASE MODEL & PWM GAIN)

ACTUAL CURRENT $I_{ma}$

$I_{Aref}$

$$\frac{T_{AN1} s+1}{T_{AD1} s+1} \cdots \frac{T_{ANm} s+1}{T_{ADm} s+1}$$

$I_{FAref}$

$+$  $\Delta I_A$  $-$

$K_0$

$$\frac{(Ls+R)/K}{T_{BD0} s+a} \cdot \frac{T_{BN1} s+1}{T_{BD1} s+1} \cdots \frac{T_{BNn} s+1}{T_{BDn} s+1}$$

$$K \cdot \frac{1}{Ls+R}$$

23

MOTOR ANGULAR VELOCITY, CURRENT, VEHICLE SPEED, OR STEERING TORQUE

26

25

$+$
$+$

CURRENT DETECTION DETECTION NOISE ξ

EP 1 914 878 A2

## FIG. 12

$\left| \dfrac{I_{ma}}{I_{Aref}} \right|, \left| \dfrac{I_{ma}}{\xi} \right|$

NOISE AREA

(1) ORDER = 1   EX: $\dfrac{1}{Ts+1}$

ROLL-OFF IS SLOW

RESPONSE: SLOW
DETECTION NOISE: INSENSITIVE

(2) ORDER = 2   EX: $\dfrac{1}{(Ts+1)^2}$

ROLL-OFF IS FAST

$I_{Aref}$: A-PHASE CURRENT COMMAND VALUE
$I_{ma}$: A-PHASE ACTUAL CURRENT
$\xi$: DETECTION NOISE

# FIG. 13

STEERING TORQUE T

VEHICLE SPEED Vs

**21** FIRST GENERATION PART FOR GENERATING CURRENT COMMAND VALUE

CURRENT COMMAND VALUE I$_{ref}$

**22** SECOND GENERATION PART FOR GENERATING EACH-PHASE CURRENT COMMAND VALUE

CURRENT COMMAND VALUE I$_{refa}$

**23** PREFILTER

I$_{FAref}$

I$_{FCref}$

**24**

**25** ΔIa   ΔIc

**26** SERIES COMPENSATOR HAVING FINITE GAIN

**27** PWM CONTROL PART

**28** INVERTER CIRCUIT

**8** MOTOR

**19**

CURRENT DETECTION VALUE Iadet

CURRENT DETECTION VALUE Icdet

CURRENT COMMAND VALUE I$_{refc}$

ANGLE θ, ANGULAR VELOCITY ω

**20** ANGULAR VELOCITY CALCULATION PART

ANGLE θ

EP 1 914 878 A2

# FIG. 14

23

$I_{Aref}$ → $\dfrac{v_2S^2+v_1S+v_0}{w_2S^2+w_1S+w_0}$ → $I_{FAref}$

23a

23b

$I_{Cref}$ → $\dfrac{v_2S^2+v_1S+v_0}{w_2S^2+w_1S+w_0}$ → $I_{FCref}$

# FIG. 15

26

$\Delta Ia$ → $\dfrac{p_2s^2+p_1s+p_0}{q_2s^2+q_1s+q_0}$ → $V_{Aref}$

26a

26b  26c

$-$

→ $V_{Bref}$

$-$

$\Delta Ic$ → $\dfrac{p_2s^2+p_1s+p_0}{q_2s^2+q_1s+q_0}$ → $V_{Cref}$

# FIG. 16

STEERING TORQUE T

VEHICLE SPEED Vs

CURRENT COMMAND VALUE I_ref

CURRENT COMMAND VALUE I_refa

CURRENT COMMAND VALUE I_refc

21 FIRST GENERATION PART FOR GENERATING CURRENT COMMAND VALUE

22 SECOND GENERATION PART FOR GENERATING EACH-PHASE CURRENT COMMAND VALUE

23 PRE-FILTER

25 $+ \Delta Ia$ $+ \Delta Ib$ $+ \Delta Ic$

29 DETECTION ERROR CORRECTION PART

26 SERIES COMPENSATOR HAVING FINITE GAIN

27 PWM CONTROL PART

28 INVERTER CIRCUIT

8 MOTOR

24

19

CURRENT DETECTION VALUE Iadet

CURRENT DETECTION VALUE Ibdet

CURRENT DETECTION VALUE Icdet

ANGLE θ, ANGULAR VELOCITY ω

20 SECOND DETECTION PART FOR DETECTING MOTOR ANGULAR VELOCITY

ANGLE θ

EP 1 914 878 A2

FIG. 17

23

$I_{Aref}$ → $\dfrac{v_2S^2+v_1S+v_0}{w_2S^2+w_1S+w_0}$ → • → $I_{FAref}$

23a    23b    23c → ⊖ → $I_{FBref}$

$I_{Cref}$ → $\dfrac{v_2S^2+v_1S+v_0}{w_2S^2+w_1S+w_0}$ → • → $I_{FCref}$

FIG. 18

29

$\Delta Ia$ → • → ⊕ → $\Delta Ia'$    29c

$\Delta Ib$ → ⊕ → $1/3$ → $\Delta Im$ • 29b

29a

$\Delta Ic$ → • → ⊕ → $\Delta Ic'$    29d

FIG. 19

26

$\Delta Ia'$ → $\dfrac{p_2S^2+p_1S+p_0}{q_2S^2+q_1S+q_0}$ → • → $V_{Aref}$

26a    26b    26c → ⊖ → $V_{Bref}$

$\Delta Ic'$ → $\dfrac{p_2S^2+p_1S+p_0}{q_2S^2+q_1S+q_0}$ → • → $V_{Cref}$

# FIG. 20

CURRENT
COMMAND VALUE
$I_{ref}$

d-AXIS CURRENT
COMMAND VALUE
$I_{dref}$

d-AXIS VOLTAGE
COMMAND VALUE
$Vd_{ref}$

q-AXIS VOLTAGE
COMMAND VALUE
$Vq_{ref}$

STEERING
TORQUE
T

VEHICLE
SPEED
Vs

21 — FIRST GENERATION PART FOR GENERATING CURRENT COMMAND VALUE

22 — SECOND GENERATION PART FOR GENERATING d-q AXIS CURRENT COMMAND VALUE

23 — PRE-FILTER

$I_{Fdref}$

$I_{Fqref}$

25 — $+$ $\Delta$Id $-$ , $+$ $\Delta$Iq $-$

26 — SERIES COMPENSATOR HAVING FINITE GAIN

42 — 2-PHASE/ 3-PHASE CONVERSION PART

27 — PWM CONTROL PART

28 — INVERTER CIRCUIT

19

8 — MOTOR

q-AXIS CURRENT
COMMAND VALUE $I_{qref}$

d-AXIS CURRENT
DETECTION VALUE Imd

q-AXIS CURRENT
DETECTION VALUE Imq

41 — 3-PHASE/ 2-PHASE CONVERSION PART

A-PHASE CURRENT COMMAND VALUE Ima

B-PHASE CURRENT COMMAND VALUE Imb

C-PHASE CURRENT COMMAND VALUE Imc

ELECTRICAL ANGLE θe

MOTOR ANGULAR VELOCITY ωm

20 — SECOND DETECTION PART FOR DETECTING MOTOR ANGULAR VELOCITY

MOTOR ANGLE θm

24

EP 1 914 878 A2

35

## EP 1 914 878 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006283019 A
- JP 2007105592 A
- JP 2006027412 A